Europäisches Patentamt

European Patent Office

Office européen des brevets

(19)

(11) Veröffentlichungsnummer : **0 369 285 B1**

(12) EUROPÄISCHE PATENTSCHRIFT

(45) Veröffentlichungstag der Patentschrift :
19.08.92 Patentblatt 92/34

(51) Int. Cl.⁵ : **H04N 5/92,** H04N 11/04

(21) Anmeldenummer : 89120541.1

(22) Anmeldetag : 07.11.89

(54) Bildverarbeitungssystem.

Verbunden mit 89912969.6/0444095
(europäische
Anmeldenummer/Veröffentlichungsnummer)
durch Entscheidung vom 15.10.91.

(30) Priorität : 15.11.88 DE 3838609

(43) Veröffentlichungstag der Anmeldung :
23.05.90 Patentblatt 90/21

(45) Bekanntmachung des Hinweises auf die
Patenterteilung :
19.08.92 Patentblatt 92/34

(84) Benannte Vertragsstaaten :
AT BE CH DE ES FR GB GR IT LI LU NL SE

(56) Entgegenhaltungen :
EP-A- 0 114 693
DE-A- 3 435 265
US-A- 4 633 330
US-A- 4 652 909

(56) Entgegenhaltungen :
FERNSEH- UND KINO-TECHNIK, 41. Jahrgang, Nr. 1/2-1987, Heidelberg HEINZ SAUER-
BURGER "Breit- und schmalbandige
kompatibleeinkanalige HDTV-Übertragung"
Seiten 23-32
FREQUENZ, Band 42, Ausgabe 10, Oktober
1988, Berlin GÜNTER SCHAMEL "Mehr- dimensionale Vorfilterung, Reduktion der Abtastrateund Interpolation von HDTV Signalen"
Seiten 284-288

(73) Patentinhaber : Deutsche Thomson-Brandt
GmbH
Postfach 2060
W-7730 Villingen-Schwenningen (DE)

(72) Erfinder : Hackett, Andrew
2 Rue des Champs
Goxwiller F-67210 Obernai (FR)

(74) Vertreter : Körner, Peter, Dipl.-Ing.
Deutsche Thomson-Brandt GmbH Patent- und
Lizenzabteilung Göttinger Chaussee 76
W-3000 Hannover 91 (DE)

**Beschreibung**

Die Erfindung betrifft ein Bildverarbeitungssystem zur Bearbeitung und Wiedergabe von Videosignalen.

Mit der Einführung des digitalen Videorecorders ist es möglich, konventionelle Videosignale, die z.B. der CCIR Norm 601 entsprechen, im digitalen Format aufzuzeichnen. Dadurch ist es möglich, Videosignale digital aufzuzeichnen und sie im identischen Format wiederzugeben.

Durch die Verwendung eines standardisierten Videoaufzeichnungsgerät ist es somit möglich, Programmaterial unterschiedlicher Normen zu mischen und sie auf einen Standard aufzuzeichnen. So kann z.B. das Videosignal von einer Kamera geliefert werden, welche ein Bildsignal mit 625 Zeilen, progressive Abtastung und 50 Hz Bildwechselfrequenz liefert. Das zweite Signal kann z.B. ein Standard-Videosignal sein mit 625 Zeilen, Zeilensprung sowie 50 Hz Bildwechselfrequenz.

Da ein Aufzeichnungsgerät z.B. nach CCIR Norm 601 nur Bildsignale mit Zeilensprung aufzeichnen kann sowie eine begrenzte Bandbreite aufweist, ist ein progressiv abgetastetes Videosignal in seiner Datenrate zu reduzieren sowie eine Umsetzung in ein Bild mit Zeilensprung erforderlich. Eine Datenreduktion kann z.B. durch Filterung durchgeführt werden. Die Erzeugung eines Bildes mit Zeilensprung kann z.B. in Verbindung mit der vorgenannten Filterung durch das sogenannte Line-shuffling-Verfahren durchgeführt werden. Ein solches Videobild stellt dann ein Signal nach CCIR-Norm 601 dar und ist somit aufzeichenbar. Zur Bildwiedergabeverbesserung des ursprünglichen, progressiven Videobildes kann eine Nachverarbeitung mittels eines inversen Lineshufflings und einer inversen Filterung durchgeführt werden.

Aus den Schriften US-A-46522909 und "Breit- und schmalbandige kompatible einkanalige HDTV-Übertragung", H.Sauerburger, Fernseh- und Kinotechnik Nr. 1/2, 1987, ist es bekannt, wie progressiv abgetastete Videosignale gefiltert, unterabgetastet und mit einem künstlichen Zeilensprung versehen werden können, damit sie über Standard-Fernsehkanäle übertragen werden können. In US-A-4652909 wird auch beschrieben, wie solche Signale aufgezeichnet bzw. wiedergegeben werden können.

Die ursprünglich progressiven Videosignale mit künstlichem Zeilensprung können aber z.B nach einer solchen Vorverarbeitung auch mit Standard-Videosignalen gemischt und aufgezeichnet werden. So erzeugte Mischsignale werden zur Bildwiedergabeverbesserung ebenfalls der Nachverarbeitung zugeführt. Dadurch sind aber auch die aufgezeichneten Standard-Videosignalebei der Wiedergabe nachbearbeitet, wodurch es bei diesen Signalen zu sichtbaren Bildfehlern kommt. Die beiden obengenannten Schriften befassen sich aber nicht mit den Problemen, die bei einer solchen abwechselnden Verarbeitung dieser Bildsignale enstehen und offenbaren dazu auch keine entsprechende Lösung.

Aufgabe der Erfindung ist es, ein Bildverarbeitungssystem anzugeben, welches Fernsehsignale unterschiedlicher Normen mischen, aufzeichnen und wiedergeben kann unter Vermeidung der durch eine Nachbearbeitung entstehenden Fehler.

Diese Aufgabe wird durch die im Patentanspruch 1 angegebenen Maßnahmen gelöst. Vorteilhafte Weiterbildungen der Erfindung sind in den Unteransprüchen beschrieben.

Es wird vorgeschlagen, Standard-Videosignale einer Vorkorrektur zu unterziehen, welche die durch die Nachverarbeitung auftretenden Fehler reduziert. Die Videosignale werden durch Bildpunkte dargestellt, die in Form von Zeilen und Spalten angeordnet sind. Zur Vorkorrektur werden die Bildpunkte jeder zweiten Spalte des Eingangssignals in vertikaler Richtung vershoben interpoliert, und zwar in der gleichen Richtung wie die Bildpunkte der progressiv abgetasteten Videosignale bei der Erzeugung von Bildsignalen mit künstlichem Zeilensprung. Die Größe dieser vertikalen Verschiebung der Bildpunkte beträgt eine halbe Zeile.

Als weitere Lösung der Aufgabe kann zur Vermeidung der durch die Nachbearbeitung entstehenden Fehler eine Zeilentranscodierung durchgeführt werden. Dadurch wird ein Bild mit doppelter Zeilenzahl erzeugt, welches dann das gleiche Format aufweist wie das progressive Quellensignal. Die weitere Verarbeitung wie Filterung und Lineshuffling kann somit identisch verlaufen.

Nachstehend wird ein Ausführungsbeispiel an Hand der Zeichnung erläutert:

Fig. 1 Anordnung der Abtastwerte nach Vorverarbeitung eines progressiven Eingangssignals,

Fig. 2 ein progressives Schwarz-Weiß-Signal,

Fig. 3 ein Bildsignal mit Zeilensprung ohne Vorverzerrung,

Fig. 4 ein Bildsignal mit Zeilensprung mit Vorverzerrung,

Fig. 5 Bildverarbeitungssystem

Fig. 6 ein diagonales Filter

Fig. 7 eine Lineshufflingschaltung

Fig. 8 eine inverse Lineshufflingschaltung

Fig. 9 Vorverzerrungsschalter

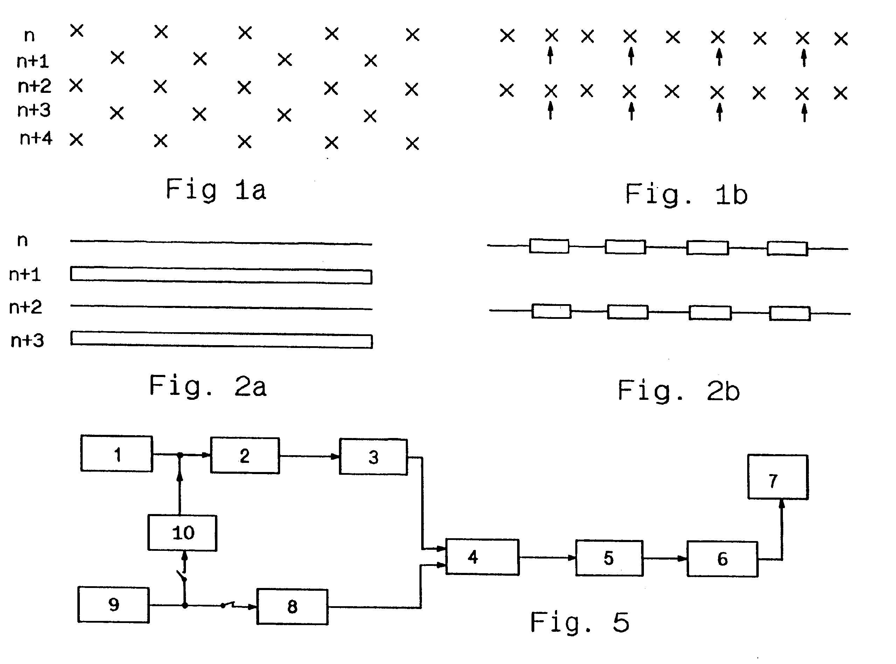

Fig. 1a zeigt ein Bildsignal ohne Zeilensprung nach einer Datenreduktionsstufe. Die Bildpunkte der Zeilen n, n+1, ... haben nach einer diagonalen Filterung eine Quincunx Struktur. Fig. 1b zeigt die Anordnung der Bildpunkte nach einem Lineshuffling. Die Bildpunkte jeder 2n+1ten Zeile des progressiven Eingangsbildes werden in die 2nte Zeile verschoben. Es entsteht ein Videohalbbild mit der halben Zeilenzahl des Eingangsbildes.

Fig. 2a zeigt ein Eingangssignal bestehend aus Schwarz-Weiß-Übergängen von Zeile zu Zeile. Durch das nach Fig. 1 durchgeführte Lineshuffling entsteht ein entsprechend Fig. 2b gezeigter horizontaler Schwarz-Weiß-Übergang.

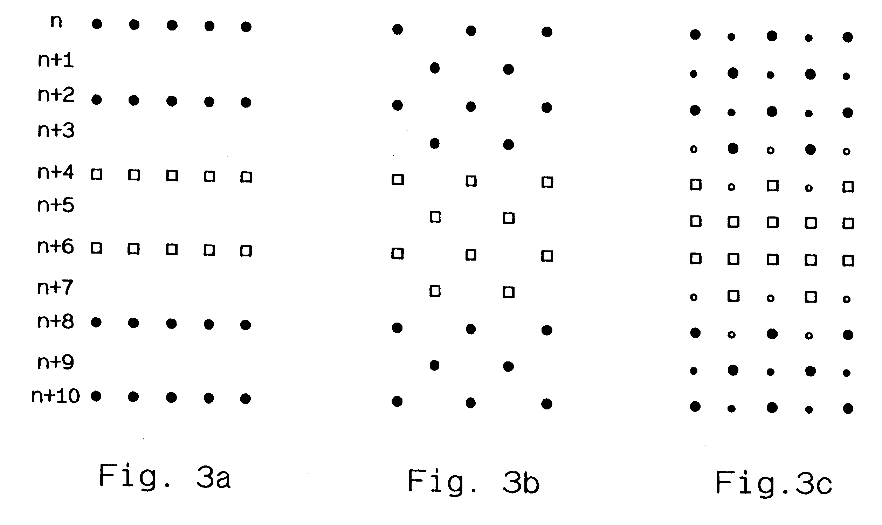

Fig. 3 zeigt die Auswirkung der Nachverarbeitung auf ein Standard-TV-Signal mit Zeilensprung (Fig. 3a). Die großen schwarzen Kreise stellen schwarze Bildpunkte, die großen hellen Rechtecke weiße Bildpunkte des Originalbildes dar, die kleinen hellen und schwarzen Kreise die durch die Nachbesserung ermittelte Bildpunkte.

Wie Fig. 3b zu entnehmen ist, werden durch das inverse Lineshuffling Bildpunkte der originalen Zeile in vertikaler Richtung in die Zwischenzeilen 2n + 1 verschoben.

Die anschließende selektive Nachfilterung zur Erzeugung eines progressiven Wiedergabesignals, Fig. 3c, zeigt als Ergebnis eine Sägezahnstruktur in den Zeilen n+3, n+8.

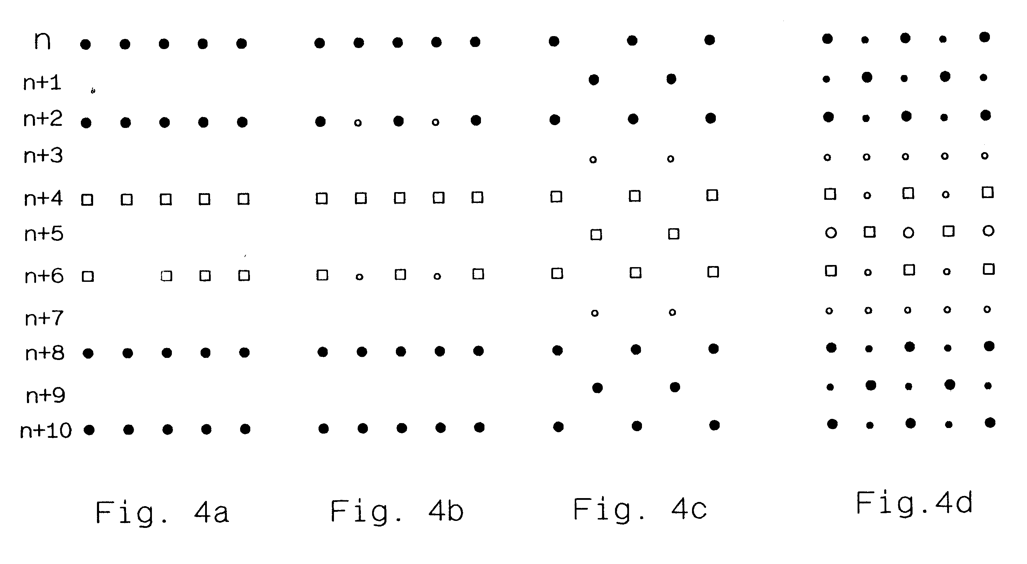

Zur Vermeidung dieser im Originalbild nicht vorhandenen Sägezahnstruktur wird gemäß Fig. 4 eine Vorverzerrung des Bildsignals mit Zeilensprung vor der studiomäßigen Verarbeitung durchgeführt.

Fig. 4a zeigt wieder Bildpunkte eines ersten Halbbildes eines Standard-TV-Signals mit Schwarz-Weiß-Übergängen. Durch eine halbzeilige auf ddie Zeilen des Halbbilds bezogene vertikale Verschiebung der Bildpunkte, d.h. durch Interpolation vertikal übereinanderliegender Bildpunkte in jeder zweiten Bildpunktspalte, werden z. B. in den Zeilen n+2, n+6 die als kleine helle Kreise angegebenen Interpolationswerte erzeugt, die die Originalbildpunkte ersetzen. (Fig. 4b)

Fig. 4c zeigt dann das Ergebnis der Verarbeitungsstufe nach dem inversen Lineshuffling für dieses Halbbild. Für das zweite Halbbild gilt entsprechendes.

Fig. 4d gibt das Ergebnis am Ausgang des Bildverarbeitungssystems wieder. Wie den Zeilen n+3, n+7 zu entnehmen ist, wird durch die Vorverzerrung die Sägezahnstruktur bei Zeilenübergängen mit hochfrequenter Vertikalstruktur weitgehendst vermieden.

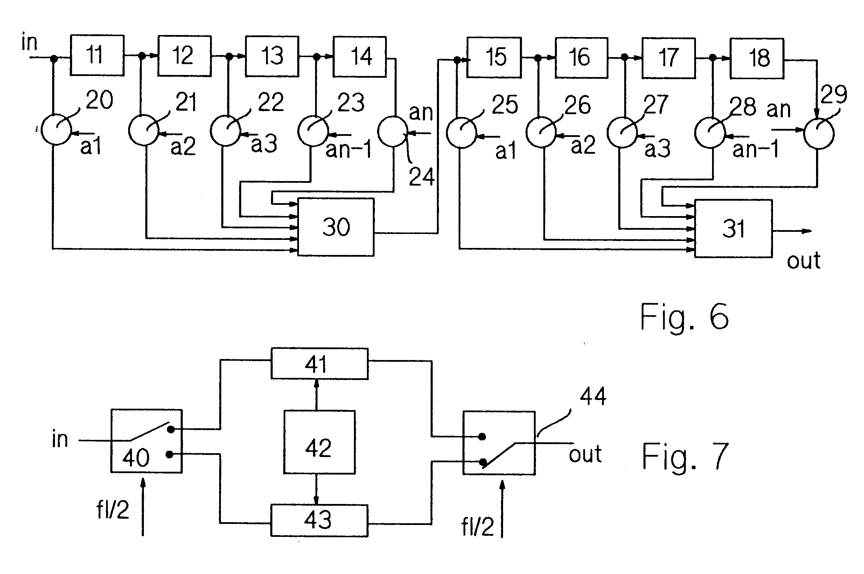

Fig. 5 zeigt ein Bildverarbeitungssystem.

Das von einer Kamera 1 erzeugte progressive Bildsignal mit 625 Zeilen und 50 Hz Bildwechselfrequenz, wird einem Diagonalfilter 2 und einer Schaltung 3 zur Durchführung eines Lineshufflings zugeführt. Das Ausgangssignal wird auf einem standardisierten Videoaufzeichnungsgerät 4 aufgezeichnet, welches z.B. auch einen Mischer für verschiedene TV-Eingangssignale enthalten kann. Zur Wiedergabeverbesserung wird das abgespielte Bildsignal einer inversen Lineshufflingschaltung 5 und einer selektiven Nachfilterung 6 zugeführt, dessen Ausgangssignal auf einem Monitor 7 wiedergegeben werden kann.

Das von einer Standardkamera 9 gelieferte Bildsignal mit Zeilensprung wird durch eine Vorverzerrungsschaltung 8 vorverzerrt und dem Videoaufzeichnungsgerät 4 zugeführt. Durch die Vorverzerrungsschaltung 8 werden die in Fig. 3 beschriebenen Nachteile weitgehendst vermieden.

Als weitere erfindungsgemäße Lösung der Aufgabe kann das Signal der Standardkamera 9 alternativ einer Zeilentranscodierung 10 zugeführt werden.

Durch die Zeilentranscodierung 10 wird das Bildsignal der Standardkamera 9 in ein Format umgewandelt, wie es bei dem progressiven Bildsignal vor der Filterung 2 vorliegt.

Das so erzeugte Bildsignal durchläuft dann parallel eine Schaltung 3 zur Durchführung des Lineshufflings und als Summensignal nach der Aufzeichnung die gleichen Verarbeitungsstufen wie das progressive Bildsignal.

Fig. 6 zeigt den Aufbau eines Diagonalfilters 2, wie er bei dem erfindungsgemäßen Bildverarbeitungssystem verwendet werden kann.

Da Eingangssignal IN wird dabei einer Kette von Verzögerungsgliedern 11 bis 14 zugeführt. Am Eingang des Verzögerungsgliedes 11 sowie an den Ausgängen der Verzögerungsglieder 11 bis 14 wird das Signal Gewichtungsschaltungen 20 bis 24 zugeführt, die das Signal mit Filterkoeffizienten a1, a2,..., an-1, an wichtet. Die Ausgangssignale der Gewichtungsschaltungen 20 bis 24 werden einer Summationsschaltung 30 zugeführt, deren Ausgangssignal einer zweiten Verzögerungskette 15 bis 18 zugeführt wird. Das Eingangssignal der Verzögerungsschaltung 15 sowie die Ausgangssignale der Verzögerungsschaltungen 15 bis 18 werden ebenfalls Gewichtungsschaltungen 25 bis 29 zugeführt, die mit entsprechenden Gewichtungsfaktoren a1, a2,...,an-1, an gewichtet werden. Die Ausgangssignale der Gewichtungsschaltungen 25 bis 29 werden einem Summierer 31 zugeführt, dessen Ausgangssignal der Schaltung 3 zur Durchführung eines Linesshufflings geführt wird.

Fig. 7 zeigt den Schaltungsaufbau einer Lineshufflingschaltung 2. Das Ausgangssignal des Summierers 31 wird einem steuerbaren Schalter 40 zugeführt. Der Schalter 40 wird mit der halben Zeilenfrequenz f1/2 umgeschaltet. Die Daten werden je nach Schalterstellung in einen Zeilenspeicher 41 oder eine Zeilenspeicher 43 eingeschrieben. Die Adressierung der Zeilenspeicher 41, 43 erfolgt durch eine Adressgenerator 42. Die Ausgänge der Zeilenspeicher 41, 43 führen auf einen steuerbaren Umschalter 44, der ebenfalls mit der halben Zeilenfrequenz f1/2 umgeschaltet wird.

Die Lineshufflingschaltung 3 arbeitet wie folgt. Die Eingangszeilen werden in einen Zeilenspeicher in der Weise eingeschrieben, daß bei geraden Abtastwerten der ersten Zeile diese in den Speicher mit gerader Adresse eingeschrieben werden und daß bei ungeraden Abtastwerten der zweiten Zeile diese in den ungeraden Adressbereich desselben Speichers geschrieben werden.

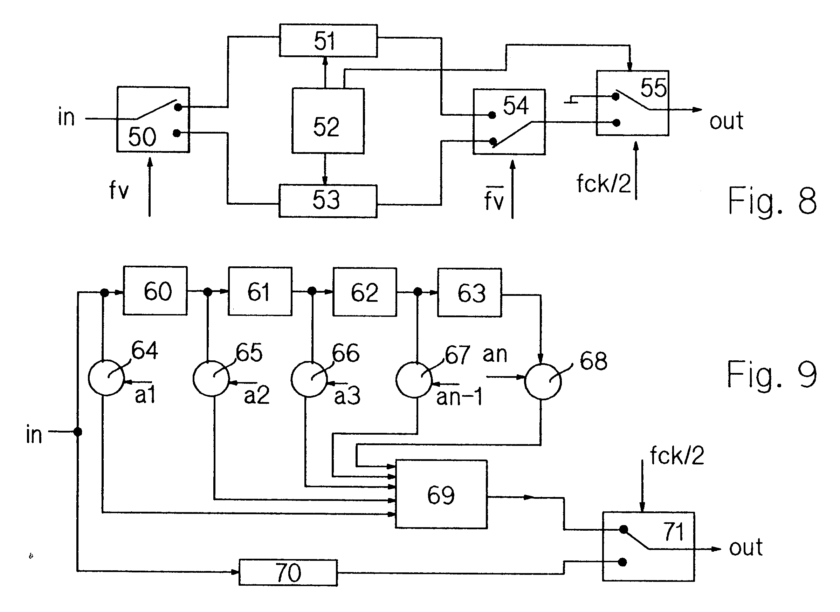

Fig. 8 zeigt eine inverse Lineshufflingschaltung 5. Sie arbeitet in komplementärer Weise wie die Lineshufflingschaltung nach Fig. 7. Die Eingangdaten werden einem Umschalter 50 zugeführt, der mit einer Frequenz fv umgeschaltet wird. Je ein Ausgang des Umschalters 50 führt auf Zeilenspeicher 51, 53, deren Adressen durch einen Adressgenerator 52 angesteuert werden. Die Ausgänge der Zeilenspeicher 51, 53 führen auf Eingänge eines Umschalters 54, der mit der inversen Umschaltfrequenz fv umgeschaltet wird. Der Ausgang des Umschalters 54 führt auf einen Eingang eines Umschalter 55. Der zweite Eingang des Umschalters 55 ist auf Bezugspotential gelegt.

Die inverse Lineshufflingschaltung arbeitet wie folgt. Die Eingangszeilen werden sequenziell in einen Speicher 51, 53 eingelesen. Während dieser Zeit werden aus dem anderen Speicher die Daten der dort eingeschriebenen Zeilen ausgelesen. Die Taktfrequenz der Ausgangzeile ist doppelt so groß wie die Taktfrequenz der Eingangzeile. Während des Lesens werden die geraden Abtastwerte während der Dauer einer Ausgangzeile, die ungeraden Abstastwerte während der Dauer einer zweiten Zeile gelesen. Um eine Ping-Pong-Struktur für das Interpolationsfilter 6 zu erzielen, werden durch eine Steuerleitung des Adressgenerators 52 bestimmte Abtastwerte auf Null gesetzt. Die auf Null gesetzten Abtastwerte der ersten Auslesezeile sind die geraden Abtastwerte und bei der zweiten Auslesezeile die ungeraden Abtastwerte.

Fig. 9 zeigt eine Vorverzerrungsschaltung 8. Diese Schaltung ist im wesentlichen ein allpaß-vertikales-digitales Filter mit einer Verzögerung von der Dauer einer halben Zeile. Das Eingangssignal IN wird Zeilenspeichern 60, 61, 62, 63 zugeführt, deren Eingang bzw. Ausgang Datengewichtungsschaltungen 64 bis 68 zugeführt werden. Die Daten werden mit Gewichtungsfaktoren a1 bis an gewichtet. Die Ausgangssignale der Gewichtungsschaltungen 64 bis 68 werden einer Summationsschaltung 69 zugeführt. Das Eingangssignal IN wird ebenfalls einer Zeilenverzögerungschaltung 70 zugeführt. Das Ausgangssignal der Zeilenverzögerungsschaltung 70 wird auf einen Eingang eines Umschalters 71 gegeben. Der Umschalter 71 wird mit der Taktfrequenz fck/2 der halben Pixelfrequenz umgeschaltet. Dieses so aufgebaute Filter weist eine Verzögerung von einer halben Zeile auf.

Die in Fig. 6 bis Fig. 9 angegebenen Schaltungsbeispiele sind Ausführungsbeispiele für die in Fig. 5 gezeichneten schematischen Funktionsblöcke. Es sind andere Ausgestaltungen der einzelnen Schaltungen denkbar.

## Patentansprüche

1. Bildverarbeitungssystem zur Verarbeitung und Wiedergabe von hochaufgelösten und/oder Standard-Videosignalen in einem digitalen Komponentenstudio (4), insbesondere ein digitales standardisiertes Videoaufzeichnungsgerät, mit Mitteln zur Datenreduktion (2) und zur Erzeugung eines Zeilensprungs (3) für die hochaufgelösten Videosignale, sowie mit Mitteln (5, 6) zu einer Wiedergabeverbesserung, wobei die Videosignale aus in Form von Zeilen und Spalten angeordneten Bildpunkten bestehen und in den Mitteln zur Datenreduktion Bildpunkte in vertikaler Richtung verschoben werden, **dadurch gekennzeichnet**, daß die Standard-Videosignale vor der studiomäßigen Verarbeitung, insbesondere Aufzeichnung, mittels einer Interpolation eine Vorverzerrung erfahren, die aus einer Verschiebung der Bildpunkte um eine halbe Zeile in vertikaler Richtung besteht, und daß die Standard-Videosignale die gleichen Mittel (5, 6) zur Wiedergabeverbesserung durchlaufen wie die ursprünglich hochaufgelösten Videosignale.

2. Bildverarbeitungssystem nach Anspruch 1, **dadurch gekennzeichnet**, daß die Bildpunkte jeder zweiten Spalte von Bildpunkten vorverzerrt werden.

3. Bildverarbeitungssystem zur Verarbeitung und Wiedergabe von hochaufgelösten und/oder Standard-Videosignalen in einem digitalen Komponentenstudio (4), insbesondere eine digitales standardisiertes Videoaufzeichnungsgerät, mit Mitteln zur Datenreduktion (2) und zur Erzeugung eines Zeilensprungs (3) für die hochaufgelösten Videosignale, sowie mit Mitteln (5, 6) zu einer Wiedergabeverbesserung, wobei die Videosignale aus in Form von Zeilen und Spalten angeordneten Bildpunkten bestehen und in den Mitteln zur Datenreduktion Bildpunkte in vertikaler Richtung verschoben werden, **dadurch gekennzeichnet**, daß die Standard-Videosignale vor der studiomäßigen Verarbeitung, insbesondere Aufzeichnung, in ein dem Format der hochaufgelösten Videosignale entsprechendes Format transcodiert werden und die gleichen Mittel zur Datenreduktion (2), zur Erzeugung eines Zeilensprungs (3) und zur Wiedergabeverbesserung (5, 6) durchlaufen wie die ursprünglich hochaufgelösten Videosignale.

## Claims

1. Image processing system for the processing and reproduction of high resolution and/or standard video signals in a digital component studio (4) especially a digital standardised video recording apparatus having means for the reduction of data (2) and for the production of a line interlace (3) for the high resolution video signals as well as means (5, 6) for a correction of the reproduction, wherein the video signals consist of picture elements arranged in the form of lines and columns and, in the means for the reduction of data, picture elements are displaced in a vertical direction, **characterised in that**, before the studio-type processing, especially recording, the standard video signals undergo a predistortion by means of an interpolation which consists in a displacement of the picture elements by half a line in the vertical direction and that the standard video signals pass through the same means (5, 6) for the correction of the reproduction as the original high resolution video signals.

2. Image processing system according to Claim 1, **characterised in that**, the picture elements of each second column of picture elements are predistorted.

3. Image processing system for the processing and reproduction of high resolution and/or standard video signals in a digital component studio (4) especially a digital standardised video recording apparatus having means for the reduction of data (2) and for the production of a line interlace (3) for the high resolution video signals as well as means (5, 6) for a correction of the reproduction, wherein the video signals consist of picture elements arranged in the form of lines and columns and, in the means for the reduction of data, picture elements are displaced in a vertical direction , **characterised in that**, before the studio-type processing, especially recording, the standard video signals are transcoded into a format corresponding to the format of the high resolution video signals and pass through the same means for the reduction of data (2), for the production of a line interlace (3) and for the correction of the reproduction (5, 6) as the original high resolution video signals.

## Revendications

1. Système de traitement d'images pour le traitement et la reproduction de signaux vidéo à haute définition et/ou standard dans un studio de composants numériques (4), en particulier appareil d'enregistrement vidéo numérique standardisé avec des moyens pour la réduction des données (2) et pour la production d'un entrelacement de lignes (3) pour les signaux vidéo à haute résolution ainsi qu'avec des moyens (5, 6) pour une amélioration de la reproduction, les signaux vidéo se composant de points d'image placés en forme de lignes et de colonnes et des points d'image étant décalés dans le sens vertical dans les moyens pour la réduction de données, **caractérisé en ce que** les signaux vidéo standard sont soumis, avant le traitement en studio, en particulier avant enregistrement, à une distorsion préalable par interpolation, distorsion préalable qui est constituée par un décalage des points d'image d'une demi-ligne dans le sens vertical, et que les signaux vidéo standard passent par les mêmes moyens (5, 6) pour l'amélioration de la reproduction que les signaux vidéo à haute définition d'origine.

2. Système de traitement d'images selon la revendication 1, **caractérisé en ce que** les points d'image de chaque seconde colonne de points d'image ont subi une distorsion préalable.

3. Système de traitement d'images pour le traitement et la reproduction de signaux vidéo à haute définition et/ou standard dans un studio de composants numériques (4), en particulier appareil d'enregistrement vidéo numérique standardisé avec des moyens pour la réduction des données (2) et pour la production d'un entrelacement de lignes (3) pour les signaux vidéo à haute résolution ainsi qu'avec des moyens (5, 6) pour une amélioration de la reproduction, les signaux vidéo se composant de points d'image placés en forme de lignes et de colonnes et des points d'image étant décalés dans le sens vertical dans les moyens pour la réduction de données, **caractérisé en ce que** les signaux vidéo standard sont transcodés, avant le traitement en studio, en particulier avant enregistrement, en un format correspondant au format des signaux vidéo à haute définition et passent par les mêmes moyens pour la réduction de données (2), pour la production d'un entrelacement de lignes (3) et pour l'amélioration de la reproduction (5, 6) que les signaux vidéo à haute définition d'origine.

EP 0 369 285 B1

n    ✕     ✕     ✕     ✕     ✕

n+1     ✕     ✕     ✕     ✕

n+2 ✕     ✕     ✕     ✕     ✕

n+3     ✕     ✕     ✕     ✕

n+4 ✕     ✕     ✕     ✕     ✕

Fig 1a

Fig. 1b

Fig. 2a

Fig. 2b

Fig. 5

Fig.3c

Fig. 3b

Fig. 3a

n
n+1
n+2
n+3
n+4
n+5
n+6
n+7
n+8
n+9
n+10

Fig. 4a    Fig. 4b    Fig. 4c    Fig.4d

EP 0 369 285 B1

Fig. 6

Fig. 7

Fig. 8

Fig. 9